# EUROPÄISCHE PATENTSCHRIFT

(11) **EP 2 808 306 B1**
(45) Veröffentlichungstag und Bekanntmachung des Hinweises auf die Patenterteilung: **27.12.2017**
(21) Anmeldenummer: 14170014.6
(22) Anmeldetag: 27.05.2014
(51) Int. Cl.: C02F 3/12, C02F 1/52, C02F 1/54, C02F 1/56, C02F 101/10

(54) **Mittel zur biologischen Reinigung kommunaler Abwässer**
Means for biological purification of municipal waste water
Moyen destiné au nettoyage biologique d'eaux usées communales

(30) Priorität: 27.05.2013 AT 503542013
(43) Veröffentlichungstag der Anmeldung: 03.12.2014
(73) Patentinhaber: VTA Austria GmbH, 4681 Rottenbach (AT)
(72) Erfinder: Kubinger, Ulrich, 4675 Weibern (AT)
(74) Vertreter: Patentanwaltskanzlei Hübscher

(56) Entgegenhaltungen:
- US-B1- 6 413 417

## Beschreibung

Die Erfindung bezieht sich auf ein Mittel zur biologischen Reinigung kommunaler Abwässer mit einem Gemisch aus wenigstens einem Fällmittel zur Phosphatfällung auf Metallbasis sowie Flockungsmitteln.

Zum Einsatz kommen Fällungsmittel bei der Reinigung kommunaler und industrieller Abwässer in Kläranlagen, bei der Aufbereitung von Prozess- und Kreislaufwasser und der Klärung Nutz- oder Trinkwasser, sowie bei der Aufbereitung von Gemischen in Biogasanlagen.

Die US 6 413 417 B1 offenbart ein Verfahren zur Reinigung von mit Fluorid belastetem Wasser, insbesondere Abwasser aus Fabriken, bei denen Silikon anfällt. Es wird die Behandlung der Abwässer derart kombiniert, dass das Silikon als Mittel für die Behandlung von mit Fluorid belastetem Wasser einsetzbar ist. Mit Hilfe von Polyaluminiumchlorid (PAC) und einem Flockungshilfsmittel werden Flocken gebildet und diese in weiterer Folge abgeschieden. Zudem wird Kalkmilch eingesetzt um den PH-Wert zu erhöhen und um Fluorid zu fällen.

Die Anforderung an biologische Abwasserreinigungsanlagen ist es das Abwasser soweit von Schmutzstoffen, wie beispielsweise Phosphor, Fette, Proteine, Kohlenhydrate und den Abbauprodukten zu reinigen, damit es wieder in die Umwelt geleitet werden kann. Da die Bakterienmasse im Belebungsbecken diese Aufgabe nicht ausreichend bewerkstelligen kann, werden eben diese Fällungs/Flockungsmittel zugesetzt um die vorgeschriebenen Grenzwerte einhalten zu können.

Eine große Herausforderung für die Zusatzstoffe ist auch die Unterstützung der Trennung des gereinigten Abwassers von der Bakterienmasse, was den kritischsten Schritt dieses Verfahrens darstellt. Im Allgemeinen wird dies über separate Absetzbecken und/oder SBR Reaktoren bewerkstelligt. Diese Sedimentation ist von vielen Faktoren abhängig. So kann z.B. bedingt durch die Aufladung der Partikel eine Abstoßung der Teilchen untereinander die Flockenbildung verhindern. Bestimmte Bakterienarten bilden zudem Flocken von einer sehr geringen Dichte, was die Sinkgeschwindigkeit stark herabsetzt. Mit Hilfe der Fällungs/Flockungsmittel können die beschriebenen und auch weitere Probleme, durch z.B. die Integration von Schwebstoffen und Suspensa in die Flocke, gelöst werden. Als Fällungsmittel werden meist Aluminium- bzw. Eisensalze eingesetzt. Durch Kombination dieser mit einem Flockungshilfsmittel wie z.B. organischen polymeren Verbindungen kann dieser Effekt noch verstärkt werden. Als Beispiele für Mittel zur Reinigung kommunaler Abwässer wird auf die AT 409 857, die AT 409 858 und die AT 407 245 verwiesen.

In der Abwasseraufbereitung spielt insbesondere das Kalk-Kohlensäure-Gleichgewicht eine wichtige Rolle welches maßgeblich für die Stabilität der Flocken verantwortlich ist. Da es sich bei den Schmutzstoffen im Abwasser vorwiegend um organisches Material handelt werden durch den Abbau dieser erhebliche Mengen an Kohlendioxid gebildet, welches das Kalk-Kohlensäure-Gleichgewicht beeinflusst. Für die in der Kläranlage ablaufenden Prozesse ist es von großer Bedeutung, dass dieses Gleichgewicht stets eingehalten wird. Das Kalk-Kohlensäure-Gleichgewicht beschreibt auch indirekt das Verhältnis zwischen gelöstem und gebundenem Calcium, wobei das gebundene Calcium, gefälltes Calcium, insbesondere Calciumcarbonat, aber auch in den Schlammflocken gebundenes Calcium umfasst. Das in den Schlammflocken enthaltene Calcium ist aber essentiell für die Stabilität der Flocken. Im Umkehrschluss ist also das Kalk-Kohlensäure-Gleichgewicht essentiell für die Stabilität der Flocken und somit für einen sicheren Verlauf des Klärprozesses. Aus diesem Grund muss derzeit bei vielen Anlagen mit einem aus den Fugen geratenen Kalk-Kohlensäure-Gleichgewicht eine sehr große Menge an Kalkverbindungen (z.B.: Kalkmilch, Kreide, u. dgl.) eingesetzt werden, um zum einen die Flockenstabilität zu gewährleisten und zum anderen die Pufferkapazität des Wassers zu erhöhen und somit den pH-Wert zu stabilisieren. Diese Parameter spielen unter anderem bei der Stickstoffeliminierung eine entscheidende Rolle (Nitrifikation/Denitrifikation).

Ausgehend von einem Stand der Technik der vorgeschilderten Art liegt der Erfindung somit die Aufgabe zugrunde, ein Mittel zur biologischen Reinigung kommunaler und industrieller Abwässer zu schaffen, das mit weniger, gegebenenfalls auch ohne Zusatz von kalkhaltiger Produkte auskommt und zugleich eine verbesserte Fällwirkung und Koagulationseigenschaften aufweist.

Die Erfindung löst die gestellte Aufgabe dadurch, dass das Gemisch wenigstens ein organisches Polymer, Erdalkaliionen in gelöster Form, wobei es sich bei den Erdalkaliionen um Kalziumionen und/oder Magnesiumionen handelt, und vorzugsweise einen Stabilisator umfasst, wobei das Fällmittel wahlweise aus Fe(II)X, Fe(III)X, AlX und/oder polymeren Verbindungen davon besteht, wobei X entweder Cl und/oder ein Sulfat und/oder ein Nitrat ist und wobei der organisch polymere Anteil wahlweise aus kationifizierter Stärke, aus Epichlorhydrin-dimethylamin-copolymer, aus Polydiallyldimethylammoniumchlorid, aus Polyacrylamid oder aus Mischungen dieser Stoffe besteht.

Bezüglich der Phosphatfällwirkung wurde festgestellt, dass die Fällwirkung eines erfindungsgemäßen Mittels bezogen auf die enthaltene Wirksubstanz um ein Vielfaches stärker ist, als bei aus dem Stand der Technik bekannten Mitteln.

Die Phosphatfällung basiert zum einen Teil auf die Bildung schwerlösliche Metallsalze. Ein weiterer Teil des Phophat wird als noch nicht näher bestimmtes komplexes Salz gefällt. Ein dritter Teil wird durch Adsorption an ungelöste Komponenten entfernt. In Summe stellen sich durch das erfindungsgemäße Mittel synergetische Effekte ein, die bewirken, dass ein weit größerer Teil durch Adsorption entfernt werden kann als mit den bekannten Mitteln. Mit dem neuen Produkt kann zudem eine erhebliche Menge an Kalkmilch eingespart werden. Der Funktionsmechanismus ist zwar derart noch nicht vollständig geklärt, allerdings kann beispielsweise auf einer Anlage, auf der bisher 4000 kg Kalkmilch/Tag zudosiert werden musste, nunmehr auf eine Zudosierung komplett verzichtet werden. Waren also bislang zur Fällung ein Fällmittel, ein Mittel zur Schlammoptimierung sowie Kalkmilch erforderlich, muss nunmehr lediglich das erfindungsgemäße Produkt dosiert werden und das in erheblich geringerem Umfang. Im vorliegenden Beispiel waren das ca. 30 % weniger nur auf das vorher eingesetzte Fällmittel bezogen. Die Dosierung Flockungsmittel zur Schlammoptimierung und die Kalkmilch zur Stabilisierung der Flocken konnten komplett abgestellt werden, da diese Aufgaben ebenso von dem erfindungsgemäßen Mittel erfüllt werden. Es ergeben sich somit erhebliche Einsparungen an den aufzuwendenden Zusatzstoffen.

Es hat sich herausgestellt, dass besonders gute Ergebnisse erzielt werden, wenn das Fällmittel wahlweise aus Fe(II)X, Fe(III)X, AlX und/oder polymeren Verbindungen davon besteht, wobei X wahlweise entweder Cl, Sulfat und/oder Nitrat ist. Als organisch polymerer Anteil wird wahlweise kationifizierte Stärke, welche speziell für dieses Produkt entwickelt wurde, Epichlorhydrindimethylamin-copolymer, Polydiallyldimethylammoniumchlorid, Polyacrylamid bzw. Mischungen aus diesen Stoffen eingesetzt. Die Erdalkaliionen liegen in gelöster Form vor, wobei es sich bei den Erdalkaliionen insbesondere um Kalziumionen und/oder Magnesiumionen handelt. Als Stabilisator kann dem Mittel ein Citrat und/oder Ascorbinsäure beigegeben.

Mit der Zusammensetzung eines erfindungsgemäßen Mittels aus einer Kombination aus Fällungsmittel auf Metallbasis, organischem, natürlichem Ladungsträger (z.B. Stärkederviate) und zweiwertigen Kationen, wird das Kalk-Kohlensäure-Gleichgewicht im positiven Sinne verschoben. Die Summe der Komponenten bewirkt einen synergetischen Effekt, der einer weit höheren Dosierung von kalkhaltigen Produkten (in fester und auch flüssiger Form von z.B.: Kreide, Kalkmilch, ...) gleichkommt. Auf eine Dosierung von kalkhaltigen Produkten kann somit in den meisten Fällen verzichtet werden. In jedem Fall ist aber, insbesondere wenn trotzdem eine Kalkmilchzudosierung vorgenommen werden muss, nur ein erheblich geringerer Kalkmilcheinsatz erforderlich. Es hat sich gezeigt, dass 4000 kg 10%ige Kalkmilch durch ca. 200 kg des erfindungsgemäßen Mittels ersetzt werden können. Mit dem erfindungsgemäßen Mittel können rund 240 kg CO₂ gebunden werden. Bei einer 10.000 EW Anlage entspricht dies einer Bindung von ca. 30 % des anfallenden Kohlendioxids. Auf derartigen Anlagen werden pro Einwohner und Jahr rund 30 kg Kohlendioxid erzeugt. Mit dem erfindungsgemäßen Mittel kann dieser Wert auf rund 21 kg pro Einwohner und Jahr reduziert werden.

Ein erfindungsgemäßes Mittel setzt sich beispielsweise aus 70 bis 90% einer Polyaluminiumchloridlösung, aus 3 bis 10% der kationifizierten Stärke, aus 3 bis 10% eines Polyamins, aus 2 bis 8% einer CaCl₂ -Lösung, aus 3 bis 8% einer MgCl₂ - Lösung und aus 0,1 bis 1% einer Ascrobinsäurelösung zusammen.

Zudem betrifft die Erfindung die Verwendung eines erfindungsgemäßen Mittels zur Bindung von Kohlendioxid.

Ausführungsbeispiel einer erfindungsgemäßen Lösung:
Eine erfindungsgemäße Zusammensetzung eines Mittels umfasst 80 % einer Polyaluminiumchloridlösung, 5 % der kationifizierten Stärke, 5 % eines Polyamins, 4,5 % einer CaCl₂ Lösung, 5 % einer MgCl₂ Lösung und 0,5 % einer Ascorbinsäurelösung.

Eine andere Zusammensetzung umfasst 50 bis 90% einer Polyaluminiumchloridlösung mit 18% Al₂O₃, mit 5 bis 50% einer 23%-igen Fe(II)Cl Lösung, mit 10-50% einer 33%igen CaCl₂ Lösung, mit bis zu 10% einer 30%igen MgCl₂ Lösung und mit 0,1 - 1% einer gesättigten Ascorbinsäurlösung sowie mit 3 - 10 % einer 15%igen Lösung einer kationifizierten Stärke und bis 10% eines Epichlorhydrin-dimethyl-copolymers.

Eine weitere Zusammensetzung umfasst 61% einer Polyaluminiumchloridlösung Lösung mit 18% Al₂O₃, mit 20 % einer 23%-igen Fe(II)Cl Lösung, mit 3,5 % einer 15%igen Lösung der kationifizierten Stärke, mit 15% einer 33%igen CaCl₂ Lösung und 0,5% einer gesättigten Ascorbinsäurelösung.

## Patentansprüche

1. Mittel zur biologischen Reinigung kommunaler Abwässer mit einem Gemisch aus wenigstens einem Fällmittel zur Phosphatfällung auf Metallbasis sowie Flockungsmitteln, **dadurch gekennzeichnet, dass** das Gemisch wenigstens ein organisches Polymer, Erdalkaliionen in gelöster Form, wobei es sich bei den Erdalkaliionen um Kalziumionen und/oder Magnesiumionen handelt, und vorzugsweise einen Stabilisator umfasst, wobei das Fällmittel wahlweise aus Fe(II)X, Fe(III)X, AlX und/oder polymeren Verbindungen davon besteht, wobei X entweder Cl und/oder ein Sulfat und/oder ein Nitrat ist und wobei der organisch polymere Anteil wahlweise aus kationifizierter Stärke, aus Epichlorhydrindimethylamin-copolymer, aus Polydiallyldimethylammoniumchlorid, aus Polyacrylamid oder aus Mischungen dieser Stoffe besteht.

2. Mittel nach Anspruch 1, **dadurch gekennzeichnet, dass** der Stabilisator ein Citrat und/oder Ascorbinsäure ist.

3. Mittel nach Anspruch 1 oder 2, **dadurch gekennzeichnet, dass** es aus 50 bis 90% einer Polyaluminiumchloridlösung mit 18% Al₂O₃, mit 5 bis 50% einer 23%-igen Fe(II)Cl Lösung, mit 10-50% einer 33%igen CaCl₂ Lösung, mit bis zu 10% einer 30%igen MgCl₂ Lösung und mit 0,1 - 1% einer gesättigten Ascorbinsäurlösung sowie mit 3 - 10 % einer 15%igen Lösung einer kationifizierten Stärke und bis 10% eines Epichlorhydrin-dimethyl-copolymers besteht.

4. Mittel nach einem der Ansprüche 1 bis 3, **dadurch gekennzeichnet, dass** es aus 61% einer Polyaluminiumchloridlösung Lösung mit 18% Al₂O₃, mit 20 % einer 23%-igen Fe(II)Cl Lösung, mit 3,5 % einer 15%igen Lösung der kationifizierten Stärke, mit 15% einer 33%igen CaCl₂ Lösung und 0,5% einer gesättigten Ascorbinsäurelösung besteht.

5. Verwendung eines Mittels nach einem der Ansprüche 1 bis 4 zur Bindung von Kohlendioxid.

## Claims

1. Agent for biological purification of municipal waste water with a mixture of at least one precipitant for metal-based phosphate precipitation, and flocculating agents, **characterised in that** the mixture includes at least one organic polymer, alkaline earth ions in dissolved form, wherein the alkaline earth ions are calcium ions and/or magnesium ions, and preferably a stabiliser, wherein the precipitant selectively consists of Fe(II)X, Fe(III)X, AlX and/or polymeric compounds thereof, wherein X is either Cl and/or a sulphate and/or a nitrate and wherein the organically polymeric portion selectively consists of cationized starch, of epichlorohydrin dimethylamine copolymer, of polydiallyl dimethyl ammonium chloride, of polyacrylamide or of mixtures of these substances.

2. Agent as claimed in claim 1, **characterised in that** the stabiliser is a citrate and/or an ascorbic acid.

3. Agent as claimed in claim 1 or 2, **characterised in that** it consists of 50 to 90% of a polyaluminium chloride solution with 18% Al₂O₃, with 5 to 50% of a 23% Fe(II)Cl solution, with 10-50% of a 33% CaCl₂ solution, with up to 10% of a 30% MgCl₂ solution and with 0.1-1% of a saturated ascorbic acid solution and with 3-10% of a 15% solution of a cationized starch and up to 10% of an epichlorohydrin dimethyl copolymer.

4. Agent as claimed in any one of claims 1 to 3, **characterised in that** it consists of 61% of a polyaluminium chloride solution with 18% Al₂O₃, with 20% of a 23% Fe(II)Cl solution, with 3.5% of a 15% solution of the cationized starch, with 15% of a 33% CaCl₂ solution and 0.5% of a saturated ascorbic acid solution.

5. Use of an agent as claimed in any one of claims 1 to 4 for binding carbon dioxide.

## Revendications

1. Moyen de traitement biologique d'eaux usées communales avec un mélange d'au moins un agent de précipitation pour la précipitation du phosphate sur une base métallique, ainsi que d'agents de floculation, **caractérisé en ce que** le mélange comprend au moins un polymère organique, des ions alcalino-terreux sous forme dissoute, s'agissant, pour les ions alcalino-terreux, d'ions calcium et/ou d'ions magnésium, et, de préférence, un stabilisant, l'agent de précipitation étant composé, au choix, de Fe(II)X, Fe(III)X, AlX et/ou de composés polymères, X étant soit du Cl et/ou un sulfate et/ou un nitrate, et la fraction polymère organique étant composée au choix d'amidon cationique, de copolymère d'épichlorhydrine-diméthylamine, de polychlorure de diallyldiméthylammonium, de polyacrylamide ou de mélanges de ces substances.

2. Moyen selon la revendication 1, **caractérisé en ce que** le stabilisant est un citrate et/ou un acide ascorbique.

3. Moyen selon la revendication 1 ou 2, **caractérisé en ce qu'**il est composé de 50 à 90 % d'une solution de chlorure de polyaluminium avec 18 % Al₂O₃, avec 5 à 50 % d'une solution Fe(II)Cl à 23 %, avec 10 - 50 % d'une solution CaCl₂ à 33 %, avec jusqu'à 10 % d'une solution MgCl₂ à 30 % et avec 0,1 - 1% d'une solution d'acide ascorbique saturée, ainsi qu'avec 3 - 10 % d'une solution à 15 % d'un amidon cationique, et jusqu'à 10 % d'un copolymère d'épichlorhydrine-diméthyle.

4. Moyen selon l'une des revendications 1 à 3, **caractérisé en ce qu'**il est composé de 61 % d'une solution de chlorure de polyaluminium d'une solution avec 18 % d'Al₂O₃, avec 20 % d'une solution Fe(II)Cl à 23 %, avec 3,5 % d'une solution à 15% d'amidn cationique, avec 15 % d'une solution CaCl₂ à 33 % et 0,5 % d'une solution d'acide ascorbique saturée

5. Utilisation d'un moyen selon l'une des revendications 1 à 4 pour lier ledioxyde de carbone.
